# EUROPEAN PATENT APPLICATION

(11) **EP 0 990 554 A1**
(43) Date of publication of application: **05.04.2000**
(21) Application number: 99307745.2
(22) Date of filing: 30.09.1999
(51) Int. Cl.: B60N 2/44, B60R 13/02, A47C 31/02

(54) **Trim retaining clip**

(30) Priority: 30.09.1998 GB 9821174
(71) Applicant: Magna Seating Systems GMBH, 97816 Lohr Am Main (DE)
(72) Inventor: Wolfram, Dieter Autoseat Technologies Limited, 42859 Remscheid (DE)
(74) Representative: Raynor, Simon Mark

(57) **Abstract**

A trim clip, for example for securing trim in an automotive seat assembly, comprises first and second parts (2,4). The first part (2) is generally T-shaped, having a head (6) suitable for embedding in foam for padding a seat and a shank (8) that projects from the head (6). A front surface of the shank (8) carries a plurality of teeth (10). The second part (4) is formed as a clip having generally parallel arms (14a,14b) resiliently connected to one another. An end portion of one of the arms (14a) carries a plurality of teeth (18). The respective teeth (10,18) can be pushed into mesh with one another to retain the second component (4) on the first component (2).

## Description

The present invention relates to a trim retaining clip and in particular, but not exclusively, to a clip for attaching soft trim covers to the foam pads used on automotive seats.

An aim of the present invention is to provide a variable and/or adjustable clip with application, for example, in attaching soft trim covers to the foam pads used on seats such as automotive seats and to provide improvements generally to trim retaining clips.

From a first aspect, the invention provides a trim retaining clip.

More specifically, from another aspect, the invention provides a trim retaining clip comprising first and second components, characterised in that the first and second components each has a respective plurality of teeth, the teeth being interengagable with one another to retain the second component on the first component. The teeth permit the relative positions of the first and second components to be adjusted to accommodate various thicknesses of trim material.

The second component of a trim clip embodying the invention may be generally U-shaped, having first and second arms resiliently interconnected by a connecting portion. In such a trim clip, the teeth of the second component may be carried on an end portion of one of the arms.

In a trim clip embodying the invention, the first component is typically generally T-shaped, having a head and a shank projecting from the head. In such embodiments, the shank may have a generally rectangular cross-section. The teeth of the first component are typically carried on a front surface of the shank.

In embodiments according to the last-preceding paragraph, the head may have an hourglass shape having a central narrow portion and broader end portions.

Preferably, the respective sets of teeth are shaped such that they interact in a ratchet-like manner to retain the second component on the first component.

In typical embodiment, the respective sets of teeth are biassed into mesh with one another when the second component is located in place on the first component.

Conveniently, each of the first and second components is formed unitarily from a resilient plastic material.

An embodiment of the invention will now be described, by way of example, with reference to the accompanying drawings, in which:

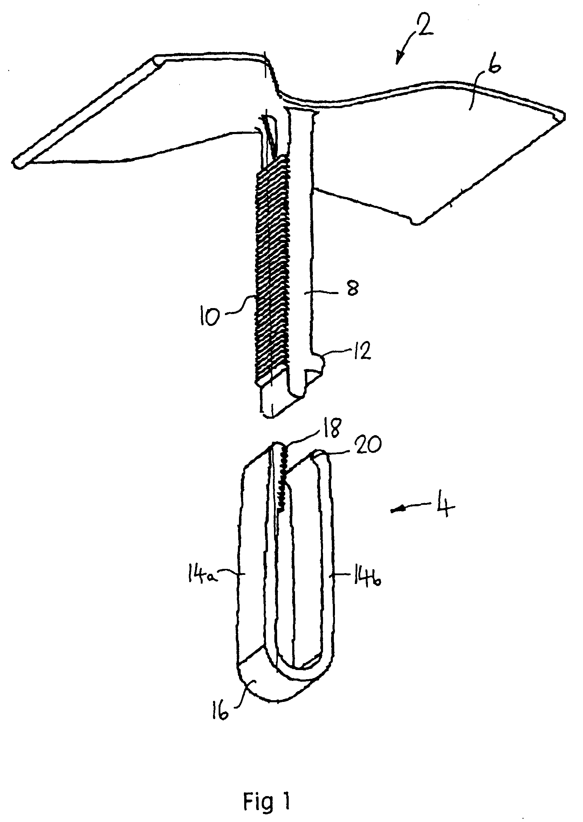

Figure 1 is a perspective view of a trim retaining clip embodying the invention.

The trim retaining clip, which is shown in perspective in Fig. 1, includes a first part 2 and a second part 4.

The first part 2 is generally T-shaped and includes a large flat head 6 and a shank 8 having a generally rectangular cross section. The shank 8 projects from the head 6 extending generally along an axis.

The head 6 has an hour-glass profile with widened end portions and a narrow waist. The head 6 extends generally normal to the axis of the shank 8, with the end portions displaced from the waist by a short distance in the direction in which the shank extends. Remote from the waist, each end portion has an edge which is substantially straight, and is formed with a bulbous rib 22 projecting in a direction perpendicular to the axis of the shank 6.

The shank 8 is rectangular in cross-section, having front, rear and side surfaces. On the front surface, there is formed a plurality of teeth 10. Each tooth is formed as a rib which projects from the front surface, each rib extending across the front surface. The teeth 10 are provided along the greater part of the length of the front surface. A lug 12 projects from and extends across the rear surface of the shank 8 at a position towards the free end of the shank 8 (that is to say, the end remote from the head 6).

The second part 4 is U-shaped, having two arms 14a,14b that extend substantially parallel to one another from a resilient connecting portion 16. A plurality of teeth 18 are provided on an inner surface of the front arm 14a located at a position towards its free end (that is to say, the end remote from the connecting portion 16). The teeth 18 formed on the second part have a pitch and size complementary to the teeth 10 on the first part 2, whereby the respective sets of teeth can mesh with one another.

The teeth 10,18 of the first and second parts 2,4 are preferably formed asymmetrically, for example with a triangular cross-section. In particular, they are shaped such that they tend to ride over one another when the second part 4 is pushed onto the shank 8 of the first part, yet strongly resist an attempt to pull the second part 8 axially from the shank 6. Thus, the teeth may be said to operate as a ratchet.

A rounded lip 20 is provided on the inner surface of the rear arm 14b towards its free end, to engage the rear surface of the shank 8. The free ends of the arms 14a,14b are resiliently biassed towards one another so that when the first and second parts 2,4 are engaged (typically by pushing the second part onto the shank 8 of the first part in an axial direction), the two sets of teeth are pressed into engagement with one another. When this happens, the two sets of teeth 10,18 become meshed to one another and thereby prevent separation of the two parts 2,4 after they have been engaged, as discussed in the last-preceding paragraph.

In use, the head 6 of the first part 2 is typically embedded in a foam pad used for cushioning on a vehicle seat with the shank 8 protruding outwards from the pad. The U-shaped second part 4 attaches the selvaged edge of a sewn trim cover to the first part 2. The two sets of ratchet teeth 10,18 allow for variations in the relative positions of the first and second parts 2,4 of the assembled clip, thereby accommodating variation in the thickness of the trim.

Each of the first and second parts 2,4 may be formed as unitary mouldings of a suitable plastic material. In particular, in the case of the second part 4, the material should be of sufficient resilience to urge the respective sets of teeth into mesh with one another while permitting them to be pulled out of mesh to facilitate assembly of the clip.

## Claims

1. A trim retaining clip comprising first and second components (2,4), characterised in that the first and second components (2,4) each has a respective plurality of teeth (10,18), the teeth being interengagable with one another to retain the second component (4) on the first component (2) .

2. A trim clip according to claim 1 in which the second component is generally U-shaped, having first and second arms (14a,14b) resiliently interconnected by a connecting portion (16) .

3. A trim clip according to claim 2 in which the teeth (18) of the second component (4) are carried on an end portion of one of the arms (14a).

4. A trim clip according to any preceding claim in which the first component (2) is generally T-shaped, having a head (6) and a shank (8) .

5. A trim clip according to claim 4 in which the shank (8) has a generally rectangular cross-section.

6. A trim clip according to claim 4 or 5 in which the teeth (10) of the first component (2) are carried on a front surface of the shank.

7. A trim clip according to any one of claims 4 to 6 in which the head (6) has an hourglass shape having a central narrow portion and broader end portions.

8. A trim clip according to any preceding claim in which the respective sets of teeth (10,18) are shaped such that they interact in a ratchet-like manner to retain the second component (4) on the first component (2) .

9. A trim clip according to any preceding claim in which the respective sets of teeth (10,18) are biassed into mesh with one another when the second component (4) is located in place on the first component (2).

10. A trim clip according to any preceding claim in which each of the first and second components (2,4) is formed unitarily from a resilient plastic material.
